# EUROPEAN PATENT SPECIFICATION

(11) **EP 3 708 539 B1**
(45) Date of publication and mention of the grant of the patent: **09.08.2023**
(21) Application number: 19382177.4
(22) Date of filing: 11.03.2019
(51) Int. Cl.: C01B 33/02, C01B 33/149, C30B 29/06

(54) **DRY METHOD TO OBTAIN COATED CRYSTALLINE SILICA WITH REDUCED TOXICITY**
TROCKENVERFAHREN ZUR HERSTELLUNG VON BESCHICHTETER KRISTALLINER KIESELSÄURE MIT VERRINGERTER TOXIZITÄT
PROCÉDÉ DE SÉCHAGE POUR OBTENIR DE LA SILICE CRISTALLINE REVÊTUE À TOXICITÉ RÉDUITE

(43) Date of publication of application: 16.09.2020
(73) Proprietor: Universitat Jaume I De Castellón, 12006 - Castellón de la Plana (Castellón) (ES); Fraunhofer-Gesellschaft zur Förderung der angewandten Forschung e.V., 80686 München (DE)
(72) Inventor: MONFORT GIMENO, Eliseo, 12006 Castelló de la Plana (Castellón) (ES); IBÁÑEZ GARCÍA, María Jesús, 12006 Castelló de la Plana (Castellón) (ES); LÓPEZ LILAO, Ana, 12006 Castelló de la Plana (Castellón) (ES); ESCRIG VIDAL, Alberto, 12006 Castelló de la Plana (Castellón) (ES); ZIEMANN, Christina, 30625 Hannover (DE); CREUTZENBERG, Otto, 30625 Hannover (DE)
(74) Representative: Pons Ariño, Angel

(56) References cited:
- WO-A1-2014/110202
- US-A- 4 015 031
- ELISEO MONFORT ET AL: "Additives for reducing the toxicity of respirable crystalline silica. SILIFE project", E3S WEB OF CONFERENCES, vol. 19, 23 October 2017 (2017-10-23), page 02030, XP055633002, DOI: 10.1051/e3sconf/20171902030
- ANASTASIA ANNA FOPPOLI ET AL: "Dry coating of solid dosage forms: an overview of processes and applications", DRUG DEVELOPMENT AND INDUSTRIAL PHARMACY, vol. 43, no. 12, 30 August 2017 (2017-08-30), pages 1919-1931, XP055632726, US ISSN: 0363-9045, DOI: 10.1080/03639045.2017.1355923

## Description

The invention relates to a dry method for obtaining coated crystalline silica with reduced toxicity. Crystalline silica presents mainly in form of quartz, cristobalite and tridymite, being quartz, by far, the most common of them. The invention belongs to the raw materials processing industry, in particular to companies that process crystalline silica as quartz and other quartz-containing materials (hereafter 'quartz') and to the industrial sectors that use powders of these compounds.

### BACKGROUND ART

Prolonged inhalation of crystalline silica is known to cause silicosis. In 1997, the International Agency for Research on Cancer (IARC) already classified this substance as carcinogenic for human beings. Its intensity seems to depend on factors inherent to the particle or on external factors. The latter suggests that some of the substances that accompany crystalline silica in certain cases can reduce its toxicity.

The silanol groups (Si-OH) have been postulated as the mediators in the pathological effect of respiring crystalline silica related to their presence in the quartz surface and, even more remarkably, that it should be possible to neutralise these active centres by means of molecules that were strongly adsorbed on them. Polyvinylpyridine-N-oxide (PVPNO) has this characteristic. The O- group of this compound forms hydrogen bridges with the silanols, thus coating the crystalline silica particles. The treatment of crystalline silica with PVPNO greatly reduces hemolysis, cytotoxicity, and damage to the macrophages.

The use of organosilanes also yielded excellent results in this regard at laboratory scale and these compounds are widely used in functionalizing the quartz surface. Finally, showed that strong Lewis acids (AlCl₃ or FeCl₃) were also able to modify crystalline silica toxicity and verified that the amount required to produce the maximum inhibition coincided with the amount needed to make quartz isoelectric, thus endorsing the theory of the silanol group-based mechanism.

There is a US patent (Vallyatan et al., Patent no. 5,096,733 of 17/03/1992) that addresses coating of quartz with organosilanes to reduce RCS-related toxicity, i.e. 'Prevention of the acute cytotoxicity associated with silica-containing minerals. This patent protects a method of preventing the acute cytotoxicity associated with exposure to silica dust by coating silica during the mining processes with a water-compatible silane (soluble in the range between 1.0 and 5-10% w/v).

Other US patent application (US 4015031 A, Reinhardt Helmut et al. 29 March 1977) discloses a process for the obtainment of Finely divided hydrophobic silica or silicate by treating the dry, moving particles with an organic silane at elevated temperature, that had been prepared by wet precipitation or pyrogenically, and which is in powdered form is heated to a temperature of about 200° to 300° C in a dry mixing and then treating at said temperature with an organosilane by dropwise, and mixing the said mixture in the dry mixture unit for a time of 10 min.

Besides, Eliseo Monfort *et al.* [Eliseo Monfort et al. "Additives for reducing the toxicity of respirable crystalline silica. SILIFE project" E3S WEB OF CONFERENCES. vol. 19. 23 October 2017 (2017-10-23) page 02030] describes a particular wet method for the obtainment of coated crystalline silica by dispersion of the silica in water, causing a higher silane expense to reduce the toxicity of the crystalline silica. In addition, it discloses the possibility of using a dry method but said dry method it is not described, it is only named.

Although this research line was started in 1960, none of this knowledge has been used to produce quartz with reduced crystalline silica toxicity on an industrial scale, probably owing to the low added value of quartz. On the other hand, there is no evidence that possible genotoxic effects of crystalline silica exposure were considered in these previous studies.

### SUMMARY OF THE INVENTION

The present invention proposes a dry method for obtaining coated crystalline silica wherein said crystalline silica powder is stably coated with a minimum percentage of hydrophilic, hydrophobic or neutral organosilanes, forming covalent bonds. The method is carried out in an industrial reactor by adding the minimum amount of silane as a coating agent thus leading to considerable reduction in the cytotoxic and genotoxic potential of crystalline silica in lung cells *in vitro* and in lung tissue *in vivo.*

The method of the present invention allows the reduction "in origin" of the crystalline silica toxicity, since the treatment of the crystalline silica is performed before receipt at the user companies in any sector, thus minimizing the health risk for workers exposed to quartz as a raw material from the outset.

Previous studies did not consider the potential genotoxicity of respirable crystalline silica but focused solely on reducing the incidence of silicosis and pneumoconiosis as inflammatory/fibrotic conditions. However, the coated quartz resulting from the process presented here is also effective in preventing direct genotoxicity of quartz in primary rat alveolar macrophages as key lung cells in vitro, whereby direct genotoxicity is related to induction of mutations and even development of lung cancer.

A significant reduction of the adverse biological effects of an active quartz sample (here referred to as quartz Q1) by respective coatings could consistently be demonstrated, both *in vitro* and *in vivo.* The reduction was evident for different coating materials and two appropriate model systems, i.e. primary rat alveolar macrophages exposed to the different quartz samples in vitro and Wistar rats, exposed to the same samples by intratracheal instillation. In-vitro endpoints consisted, amongst others, of induction membrane damage (lactate dehydrogenase release assay) and of DNA-strand breaks (alkaline comet assay), and thus genotoxicity.

The main advantages of this process over the existing ones are that
- it enables dry application of the coating agent on an industrial scale, which allows application to be readily integrated into the industrial quartz preparation process;
- small amounts of the coating agent are applied without substantial modifications of the usual process and for subsequent marketing;
- previous studies did not consider the potential genotoxicity of respirable crystalline silica, but focused solely on reducing the incidence of silicosis and pneumoconiosis as inflammatory/fibrotic conditions. However, the coated crystalline silica resulting from the process presented here is also effective in preventing direct genotoxicity of quartz in primary rat alveolar macrophages as key lung cells in vitro, whereby direct genotoxicity is related to induction of mutations and even development of lung cancer.

A first aspect of the present invention relates to a dry method for obtaining coated quartz characterized in that it consists of the following steps:
(a) adding quartz into a dry mixing unit at a temperature of between 10 ºC and 30 ºC;
(b) dry mixing the quartz of step (a) with a silane by applying the silane onto the quartz, wherein the percent of the silane is between 0.1 % and 0.6 % by weight with respect of the quartz, wherein the mixing is performed at a temperature of between 10 ºC and 30 ºC and the mixing speed is between 140 rpm and 170 rpm;
(c) continuing dry mixing the mixture in the dry mixture unit obtained in the step b) for a time of between 30 min and 4.0 h at a mixing velocity of between 60 rpm and 150 rpm;
and optionally an additional step (a'), between (a) and (b), when the silane applied in step (b) is selected from (3-acryloxypropyl)trimethoxysilane and octyltrimethoxysilane or any combination thereof ; the step (a') comprising the mixing of the silane with an amount of between 1% and 10% w/w of at least second silane selected from 3-aminopropyltrimethoxysilane, methyltriacetoxysilane, dimethyl-bis-propionyloxy-silane, bis-benzoyloxy-dimethyl-silane, N-(2-Aminoethyl)-3-aminopropyltrimethoxysilane and any combination thereof, for at least 15 minutes.

The term "crystalline silica" as used herein refers to any mineral made up of silicon and oxygen in which silicon is rounded by four atoms of oxygen forming a tetrahedrical estructure. Crystalline silica of the present invention comes in the forms of quartz, cristobalite and tridymite, or any other material that comprises any combination thereof in powder form. Quartz is the most common of these, which transforms into cristobalite when heated at high temperatures (over 1450 °C). Crystalline silica is commonly supplied as quartz of different particle sizes, with specific surface areas typically comprised between 4.5 m²/g for the finest samples and 0.15 m²/g for the coarsest samples.

The term "reactor, dry mixing unit or dry mixer unit" as used herein refers to a commercial mixing unit on which, to enable the correct coating of crystalline silica with very different properties, five modifications (including technical and safety ones) were introduced:
- A dripping system using a peristaltic pump, tygon tubes and a hand-made nozzle was designed to allow very low doses to be adequately added.
- A speed variator was connected. It allows the choice of the appropriate rotating speed depending on the properties and the amount of material to be processed.
- An air extraction system on the reactor to evacuate potential flammable gases produced during the chemical reactions was implemented.
- The reactor was also equipped with a proper discharge to ground in order to avoid electrostatic charges.
- A heat exchanger was installed to avoid elevated temperatures during long-term coating processes.

The term "silane" as used herein refers to organosilanes in liquid form, wherein preferably is:
- a polysiloxane with formula [R¹ R² R³]SiO ([(X') (X")]SiO)ₙ Si[R¹ R² R³]
   Wherein:
   X' and X" are independently selected from among halogen, hydroxyl, C₁-C₆ alkyl, C₂-C₆ alkenyl, C₂-C₆ alkynyl, C₃-C₁₀ cycloalkynyl, C₆-C₁₈ aryl, -O-C₁-C₆ alkyl, -O- C₂-C₆ alkenyl, -O-CO- C₁-C₆ alkyl, -O-N=CH-C₁-C₆ alkyl or -NR₁R₂ amine, with the condition that at least one of X' and X" is a hydrolysable group selected from among a halogen, -O- C₁-C₆ alkyl, -O-CO- C₁-C₆ alkyl, hydroxyl, -O-N=CH-C₁-C₆ alkyl or-NR₁R₂.
   R¹, R² and R³ are independently a non-hydrolysable group that are hydrophilic, hydrophobic or neutral group. Preferably R¹, R² and R³ are independently selected from among C₁-C₈ alkyl, C₂-C₈ alkenyl and - (CH₂)₃-R';
   and wherein R' is selected from among, C₁-C₈ alkyl, O-C₁-C₆ alkyl, - COO-C₁-C₆ alkyl, -NR₁R₂ amine or -NH-CO-R₄ amide.
   n is an integer having a value of 1 to 40, preferably 1 to 20 and more preferably 10 to 16.
   or
- a silane with formula R-Si[(X¹) (X²) (X³)],
   Wherein:
   X¹, X² and X³ are independently selected from among halogen, hydroxyl, C₁-C₆ alkyl, C₂-C₆ alkenyl, C₂-C₆ alkynyl, C₃-C₁₀ cycloalkynyl, C₆-C₁₈ aryl, -O-C₁-C₆ alkyl, -O- C₂-C₆ alkenyl, -O-CO-C₁-C₆ alkyl, -ON=CH-C₁-C₆ alkyl or -NR₁R₂ amine, with the condition that at least one of X¹, X² and X³ is a hydrolysable group selected from among a halogen, -O- C₁-C₆ alkyl, -O-CO- C₁-C₆ alkyl, hydroxyl, -O-N=CH-C₁-C₆ alkyl or - NR₁R₂.
   R is a non-hydrolysable group that are hydrophilic, hydrophobic or neutral group. Preferably R is selected from among, C₁-C₈ alkyl, C₂-C₈ alkenyl and -(CH₂)₃-R';
   and wherein R' is selected from among, C₁-C₈ alkyl, O- C₁-C₆ alkyl, - COO-C₁-C₆ alkyl, -NR₁R₂ amine or -NH-CO-R₄ amide.

In the present invention, the term "C₁-C₆ alkyl" relates to aliphatic, linear or branched chains containing between 1 and 6 carbon atoms, such as for example, but not limited to, methyl, ethyl, n-propyl, i-propyl, n-butyl, tert-butyl, sec-butyl, n-pentyl or n-hexyl. The term "C₁-C₈ alkyl" relates to aliphatic, linear or branched chains containing between 1 and 8 carbon atoms, such as for example, but not limited to, methyl, ethyl, n-propyl, i-propyl, n-butyl, tert-butyl, sec-butyl, n-pentyl, n-hexyl, n-heptyl, 1',1'-dimethylheptyl, 1,2-dimethylheptyl or 1', 1'-dimethylethyl, n-octyl. For both terms, the alkyl group may be optionally substituted by one or more substitutes such as halogen, hydroxyl, epoxy, C₂-C₈ alkenyl, -O-C₁-C₆ alkyl, -CO-C₁-C₆ alkyl, C₆-C₁₈ aryl, -CN, -COOH, -COO-C₁-C₆ alkyl, -CONH-C₁-C₆ alkyl, -NR₁R₂ amine, or -SO₂- C₁-C₆ alkyl.

The term "C₂-C₈ alkenyl" relates, in the present invention, to carbonated, linear or branched chains having at least one double bond and containing at least between 2 and 8 carbon atoms, such as for example, but not limited to, vinyl, 1-propenyl, 2-propenyl, 1-butenyl, 2-butenyl, 3-butenyl, 1,3-butadienyl, 3-methyl-2-butenyl, 1-hexenyl, 2-hexenyl, 3-hexenyl or similar. While the term "C₂-C₆ alkenyl" relates to carbonated, linear or branched chains having at least one double bond and containing between 2 and 6 carbon atoms, such as for example, but not limited to, vinyl, 1-propenyl, 2-propenyl, 1-butenyl, 2-butenyl, 3-butenyl, 1,3-butadienyl, 3-methyl-2-butenyl. For both terms, the alkenyl group may optionally be substituted by one or more substitutes such as halogen, hydroxyl, epoxy, -O- C₁-C₆ alkyl, -CO-C₁-C₆ alkyl, -CN, -COOH, - COO- C₁-C₆ alkyl, C₁-C₆-CONH-alkyl or C₁-C₆-SO₂-alkyl.

The term "C₂-C₈ alkynyl" relates, in the present invention, to carbonated, linear or branched chains having at least one triple bond and containing at least between 2 and 8 carbon atoms, such as for example, but not limited to, 1-propynyl, 2-propynyl, 1-butynyl, 2-butynyl, 3-butynyl, 1,3-butadiynyl, 3-methyl-2-butynyl, 1-hexynyl, 2-hexynyl, 3-hexynyl, 1-octynyl or similar.

While the term "C₂-C₆ alkynyl" relates to carbonated, linear or branched chains having at least one triple bond and containing between 2 and 6 carbon atoms, such as for example, but not limited to, 1-propynyl, 2-propynyl, 1-butynyl, 2-butynyl, 3-butynyl, 1,3-butadiynyl, 3-methyl-2-butynyl, 1-hexynyl, 2-hexynyl, 3-hexynyl or similar. For both terms, the alkenyl group may optionally be substituted by one or more substitutes such as halogen, hydroxyl, epoxy, -O-C₁-C₆ alkyl, -CO-C₁-C₆ alkyl, -CN, -COOH, -COO- C₁-C₆ alkyl, C₁-C₆ -CONH-alkyl or C₁-C₆ -SO₂-alkyl.

The term "C₃-C₁₀ cycloalkyl" relates to a stable carbonated-chain radical that forms a cycle of 3 to 10 carbon atoms, such as for example, but not limited to, cyclopropyl, cyclobutyl, cyclopentyl, cyclohexyl, adamantyl, 1-cyclopentylhexyl. The cycloalkyl group may optionally be substituted by one or more substitutes such as halogen, hydroxyl, -O-C₁-C₆ alkyl, -CO-C₁-C₆ alkyl, - CN, -COOH, -COO-C₁-C₆alkyl, -CONH-C₁-C₆ alkyl or -SO₂-C₁-C₆ alkyl. Thus, a C₃-C₇ cycloalkyl relates to a stable carbonated-chain radical that forms a cycle of 3 to 7 carbon atoms.

The term "C₆-C₁₈ aryl" relates, in the present invention, to a stable aromatic ring radical containing between 6 and 18 carbon atoms, which may be a monocyclic or multicyclic ring system that may include condensed ring systems. The aryl groups are, for example, but not limited to, phenyl, napthtyl, diphenyl, indenyl, phenantryl or antracyl. Preferably, the aryl group contains between 6 and 8 carbon atoms and, more preferably, the aryl group is a phenyl. The aryl radicals may optionally be substituted by one or more substitutes such as halogen, C₁-C₈ alkyl, C₂-C₁₈ alkenyl, C₃-C₇ cycloalkyl, halogen, hydroxyl, C₁-C₆ -O-alkyl, optionally substituted C₇-C₁₁ -O-aralkyl, amine, C₁-C₆ -CO-alkyl, C₃-C₇ -CO-cycloalkyl, -CN, -NO₂, -COOH, C₁-C₆ -COO-alkyl, C₁-C₆ -CONH-alkyl, C₁-C₆ -NCO-alkyl or C₁-C₆ -SO₂-alkyl. Substituted aryl radicals are, for example, but not limited to, 2,4-dichlorophenyl, 1 ,3-dichlorophenyl, 3,5-difluorophenl and 2-hydroxyphenyl.

The term "halogen" relates, in the present invention, to bromine, chlorine, iodine or fluoride.

The term "amine" relates, in the present invention to a group of formula - NR₁R₂ wherein R₁ or R₂ are independently selected from among hydrogen, C₁-C₆ alkyl, -O- C₁-C₆ alkyl, halogen, hydroxyl, -CO- C₁-C₆ alkyl, -CN, -COOH, - COO- C₁-C₆alkyl, -CONH-C₁-C₆ alkyl -SO₂- C₁-C₆alkyl or -Si[(X₁) (X₂) (X₃)]. In this last case with the condition that the N of the amino group is attached to two -Si[(X₁) (X₂) (Xs)] groups identical to each other, as for example is the case of the hexamethyldisilazane.

The term "amide" relates to a group of formula -NH-CO-R₄ wherein R₄ is selected from among hydrogen, C₁-C₆ alkyl, -O- C₁-C₆ alkyl, halogen, hydroxyl, -NR₁R₂ amine, -CO- C₁-C₆ alkyl, -CN, -COOH, -COO- C₁-C₆alkyl, -CONH-C₁-C₆ alkyl or -SO₂- C₁-C₆ alkyl.

In a preferred embodiment, the silane is selected from methyltrimethoxysilane, dimethyldimethoxysilane, 3-glycidoxypropyltrimethoxysilane, (3-acriloxypropyl)trimethoxysilane (AC), (3-methacryloxypropyl)trimethoxysilane, ureidopropyltrimethoxysilane, 3-aminopropyltrimethoxysilane, N-(2-aminoethyl)-3-aminopropyltrimethoxysilane, N-(3-triethoxysilylpropyl)gluconamide and any combination thereof. In an even more preferred embodiment the silane is (3-acryloxypropyl)trimethoxysilane. In a more preferred embodiment, the silane is (3-acriloxypropyl)trimethoxysilane.

In a preferred embodiment, the silane is selected from N,N-(dimethylamino)trimethylsilane, hexamethyldisilazane, vinyltrimethoxysilane, 3-choropropyltrimethoxysilane, trimethylmethoxysilane, n-octyltrimethoxysilane (OP), trimethoxypropylsilane and any combination thereof. In an even more preferred embodiment the hydrophobic silane is n-octyltrimethoxysilane. In a more preferred embodiment, the silane is octyltrimethoxysilane.

In a preferred embodiment the silane is an aminealkylpolysiloxane (AP), i.e., a polysiloxane substituted by at least a group R amine, more preferable a group -NH-(C₁-C₆ alkyl), and X' and X" are an alkoxy group, more preferable a methoxy group, and wherein n is an integer having a value of 1 to 40, preferably 1 to 16.

According to previous studies on silanes coatings over crystalline silica, silane loadings normally amount to 0.7% - 2% relative to the crystalline silica, but no dosages below 0.7% are reported in the surveyed literature. After mixing for a certain time (which depends on the type of silane added), coated crystalline silica with markedly reduced toxicity is obtained. In order to successfully coat a wide variety of crystalline silica powders, a reactor is equipped with a powder mixing system, a heat exchanger, a speed variator and a specifically designed feeder. This reactor set-up allows coated crystalline silica to be produced on an industrial scale, the process being one more stage in the usual industrial quartz processing. As a dry process is involved, the coated crystalline silica resulting from this stage can be marketed directly as a raw material without further processing.

The required silane should be fed onto the crystalline silica in the reactor, by spraying or dripping, using the aforementioned specific designed feeder that allows extremely low dosages (0.1%-0.6% by weight) to be homogeneously distributed upon the sample at industrial scale. Once the silane feeding has begun, the mixing of the reactor is started up. After all the required silane has been fed in, the reactor is closed, and the process will run for the required reaction time. When the appropriate reaction time has elapsed, the coated quartz is collected and is ready for use as raw material in industrial processes. In the case of the existence of unreacted silane or polysiloxane (when not all of the silane or siloxane react with the quartz surface), said unreacted compounds will form an unattached polysiloxane or siloxane that can be removed or neutralised at a later stage if needed.

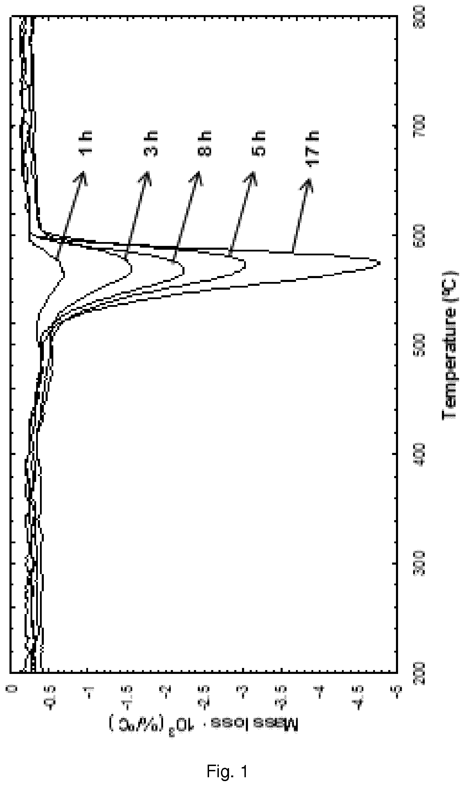

Coating takes place by means of a chemical reaction between the silane and the surface silanol groups of crystalline silica, in which stable covalent bonds are formed. This fact has been evidenced by thermogravimetric tests (the silane is released at 500-600ºC, showing an evident weight loss). See figure 1.

In a preferred embodiment, the applying silane technique used in step b) is selected from spraying or dripping. In a more preferred embodiment, the applying silane technique is dripping better than spraying when the nozzle and the quartz are not very closed and/or the system is not completely closed

In a more preferred embodiment the amount of the second silane is between 1% and 10% by weight with respect to the main silane. And in an even more preferred embodiment the amount of the second silane is 1%.

When using a second silane prior to the coating process, it is needed a dry mixing time, to complete the coating of the crystalline silica, for at least 3 hours.

In another preferred embodiment of the dry method of the present invention, have an additional step (d) that comprises eliminating the unattached polysiloxane or siloxane of step (c).

The eliminating of the unattached polysiloxane or siloxane of step (d) technique is a removing process, which comprises rinsing with water to physically remove the unattached polysiloxane.

Unless otherwise defined, all technical and scientific terms used herein have the same meaning as commonly understood by one of ordinary skilled in the art to which this invention belongs. Methods and materials similar or equivalent to those described herein can be used in the practice of the present invention. Throughout the description and claims the word "comprise" and its variations are not intended to exclude other technical features, additives, components, or steps. Additional objects, advantages and features of the invention will become apparent to those skilled in the art upon examination of the description or may be learned by practice of the invention. The following examples are provided by way of illustration and are not intended to be limiting of the present invention.

### BRIEF DESCRIPTION OF THE DRAWINGS

**Fig. 1****.** Influence of reaction time on the mass losses of quartz treated with a silane in a thermogravimetric test.
**Fig. 2****.** Diagram of the dry mixing unit.
**Fig. 3****:** Zeta potential versus carbon percentage as coating measurement.
**Fig. 4****.** Variation of zeta potential and carbon percentage with silane dosage.
**Fig. 5****.** In vitro determination of coating efficiency as of induction membrane damage in a lactate dehydrogenase release (LDH) assay expressed as % of cytotoxicity.
**Fig. 6****.** In vitro determination of coating efficiency as DNA-strand breaks induction (alkaline comet assay) expressed as % tail intensity.
**Fig. 7****.** In vivo membrane damage as lactate dehydrogenase (LDH) activity in bronchoalveolar lavage fluid of BALF.
**Fig. 8****.** In vivo determination of coating stability at 90 days after intratracheal instillation as reflected by the absolute number of recruited polymorphonuclear neutrophils (PMN) per ml of BALF.

### EXAMPLES

### Example 1: Coated crystalline silica obtained by the dry method of the present invention. Fine quartz.

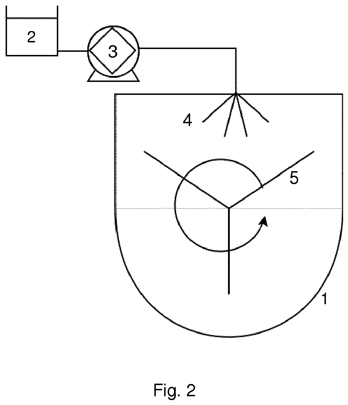

The proposed quartz coating process was carried out in a modified commercial mixer-granulator of 130-litre capacity that was used as reactor. It consists of the following main elements: proportioning system, tank, bottom discharge, control panel, and a plow and blades. Both the capacity and the functioning described here may vary, depending on the reactor used. Figure 2 shows a schematic dry mixer unit used in the example.

The conventional feeding system uses a lance or nozzle to spray the silane. However, this system had to be modified, because for some silanes spraying led to formation of a mist around the nozzle and very little amount of silane was really deposited on the quartz surface. For this reason, a dripping system was designed using a peristaltic pump (3), tygon tubes and a hand-made nozzle (4).

Once the quartz (d₅₀ = 3.39 µm; Sₑ = 4.4 m²/g) had been charged in the mixer (1) (25 kg), the air stream was opened, and the reactive mixture required (150 g silane AP) was fed.

Feeding took place by means of a peristaltic pump regulated at 30 rpm to assure proportioning for one minute.

Once the feeding had begun, the plow was started up first, followed by the mixer blades (5) running at top speed (150 rpm). When the entire reactant mixture had been fed in, the blades were stopped, the feed tube was disconnected, and the lid was put on. The plow was left running for the time required for the reaction to take place (0.5 hours). After this time had elapsed, the mixer was stopped, and the coated quartz was collected, ready to use as raw material in industrial processes.

### Example 2: Coated crystalline silica obtained by the dry method of the present invention. Fine quartz and use of a second silane.

The proposed quartz coating process was carried out in a modified commercial mixer-granulator of 130-litre capacity that was used as reactor. It consists of the following main elements: proportioning system, tank, bottom discharge, control panel, and a plow and blades. Both the capacity and the functioning described here may vary, depending on the reactor used. Figure 1 shows a schematic dry mixer unit used in the example.

The conventional feeding system uses a lance or nozzle to spray the silane. However, this system had to be modified, because for some silanes spraying led to formation of a mist around the nozzle and very little amount of silane was really deposited on the quartz surface. For this reason, a dripping system was designed using a peristaltic pump (3), tygon tubes and a hand-made nozzle (4).

In this case, with (3-acryloxypropyl) trimethoxisilane (AC) it was necessary to previously add a 1% by weight of second silane (3-aminopropyltrimethoxysilane, AM) to facilitate hydrolysis. The resulting mixture was homogenised for 15 minutes using a magnetic stirrer before being used in the process.

Once the quartz (d₅₀ = 3.39 µm; Se = 4.4 m²/g) had been charged in the mixer (1) (25 kg), the air stream was opened, and the reactive mixture required (151.5 g silane AC/AM) was fed by means of a peristaltic pump regulated at 30 rpm to assure proportioning for one minute.

Once the feed had begun, the plow was started up first, followed by the mixer blades (5) running at top speed (150 rpm). When the entire reactant mixture had been fed in, the blades were stopped, the feed tube was disconnected, and the lid was put on. The plow was left running for the time required for the reaction to take place (3 hours). After this time had elapsed, the mixer was stopped, and the coated quartz was collected, ready for use as raw material in industrial processes.

### Example 3: coated crystalline silica obtained by the dry method of the present invention. Coarse quartz.

The proposed quartz coating process was carried out in a modified commercial mixer-granulator of 130-litre capacity that was used as reactor. It consists of the following main elements: proportioning system, tank, bottom discharge, control panel, and a plow and blades. Both the capacity and the functioning described here may vary, depending on the reactor used. Figure 1 shows a schematic dry mixer unit used in the example.

The conventional feeding system uses a lance or nozzle to spray the silane. However, this system had to be modified, because for some silanes spraying led to formation of a mist around the nozzle and very little amount of silane was really deposited on the quartz surface. For this reason, a dripping system was designed using a peristaltic pump (3), tygon tubes and a hand-made nozzle (4).

Once the quartz (d₅₀ = 294 µm; Sₑ = 0,19 m²/g) had been charged in the mixer (1) (25 kg), the air stream was opened, and the reactive required (75 g silane AP) was fed.

Feeding took place by means of a peristaltic pump regulated at 15 rpm to assure proportioning for one minute.

Once the feed had begun, the plow was started up first, followed by the mixer blades (5) running at top speed (150 rpm). When the entire reactant mixture had been fed in, the blades were stopped, the feed tube was disconnected, and the lid was put on. It should be mentioned that the temperature increased significantly during the process of the coarsest quartzes. So, for safety reasons, the plow speed should be reduced until 65 rpm after the feeding and the refrigeration system can be connected. Therefore, the plow was left running at 65 rpm for the time required for the reaction to take place (0.5 hours). After this time had elapsed, the mixer was stopped, and the coated quartz was collected, ready for use as raw material in industrial processes.

### Example 4: coated crystalline silica obtained by the dry method of the present invention. Coarse quartz and use of a second silane.

The proposed quartz coating process was carried out in a modified commercial mixer-granulator of 130-litre capacity that was used as reactor. It consists of the following main elements: proportioning system, tank, bottom discharge, control panel, and a plow and blades. Both the capacity and the functioning described here may vary, depending on the reactor used. Figure 1 shows a schematic dry mixer unit used in the example.

The conventional feeding system uses a lance or nozzle to spray the silane. However, this system had to be modified, because for some silanes spraying led to formation of a mist around the nozzle and very little amount of silane was really deposited on the quartz surface. For this reason, a dripping system was designed using a peristaltic pump (3), tygon tubes and a hand-made nozzle (4).

In that case, with n-octyltrimethoxysilane, (OC) it was necessary to previously add a 1% by weight of second silane (3-aminopropyltrimethoxysilane, AM) to facilitate hydrolysis. The resulting mixture was homogenised for 15 minutes using a magnetic stirrer before being used in the process.

Once the quartz (d₅₀ = 294 µm; Se = 0,19 m²/g) had been charged in the mixer (1) (25 kg), the air stream was opened, and the reactive mixture required (75.8 g silane OC/AM mix) was fed.

Feeding took place by means of a peristaltic pump regulated at 15 rpm to assure proportioning for one minute.

Once the feed had begun, the plow was started up first, followed by the mixer blades (5) running at top speed (150 rpm). When the entire reactant mixture had been fed in, the blades were stopped, the feed tube was disconnected, and the lid was put on. For safety reasons, after the feeding, the plow speed can be reduced to 65 rpm and the refrigeration system can be connected. Therefore, the plow was left running at 65 rpm for the time required for the reaction to take place (3 h hours). After this time had elapsed, the mixer was stopped, and the coated quartz was collected, ready for use as raw material in industrial processes.

### Example 5: Assessment of coating process efficiency and toxicological effect reduction.

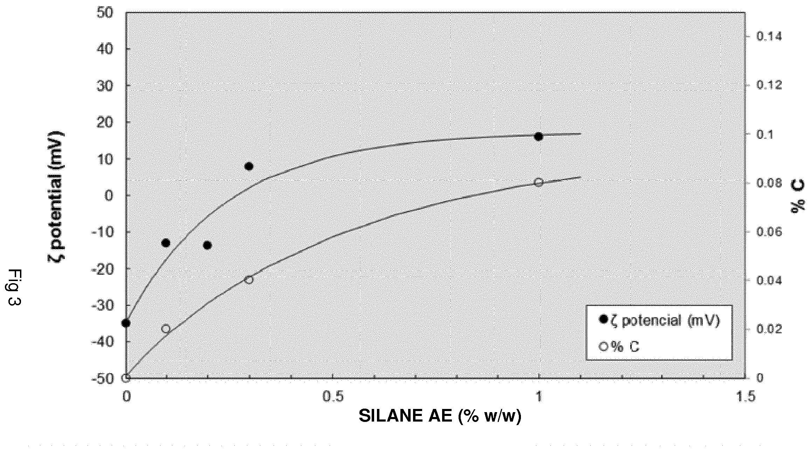

The 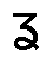 potential is a measure of the electrical charge in the surface of the suspended particles. It is thus related with the density of silanol groups in the surface of the quartz particles. As a consequence, the addition of certain coating agents to quartz suspensions can increase or reduce the 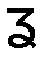 potential of the quartz (which is negative at pH > 2) and coating effectiveness can be measured in this manner. For "neutral silanes", carbon elemental analysis tests showed that this technique is sensitive enough and it is comparable to zeta potential (figure 3 shows the results obtained by both methods for (N-(2-aminoethyl)-3-aminopropyltrimethoxysilane, AE).

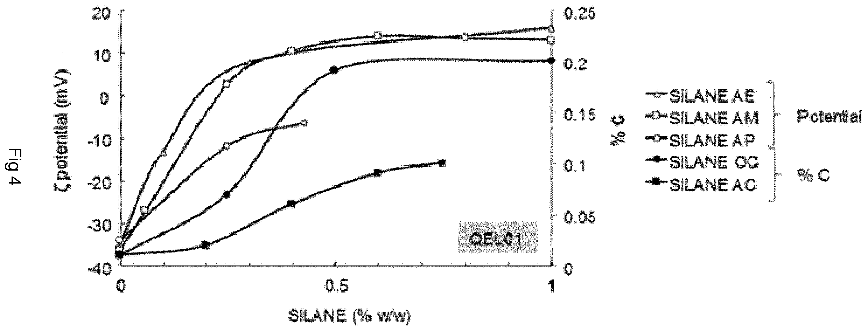

Several proportioned quantities of the most promising silanes (N-(2-aminoethyl)-3-aminopropyltrimethoxysilane (AE), 3-aminopropyltrimethoxysilane (AM), aminoalquilpolysiloxane (AP, n-octyltrimethoxysilane (OC) and (3-acryloxypropyl) trimethoxysilane (AC)) were tested to obtain the curves dosage-potential or dosage-carbon percentage, in order to establish the efficiency of the silane dosage. These results are detailed in figure 4. Based on them, the most promising samples were prepared for toxicological assessment and compared with the untreated quartz.

For the toxicological characterisation of the untreated (activity screening) and treated quartzes in vitro, well-established (geno)toxicity assays are applied and primary rat alveolar macrophages are used as highly sensitive model system. Aluminium lactate (AL) treatment of samples furthermore serves as indicator for quartz-specific effects in vitro. For validation purposes all main experiments were done in triplicate. For in vivo testing the rat model was used; lungs of Wistar rats were exposed to respirable particle fractions (prepared by water sizing of the bulk dusts) by intratracheal instillation, which is a wellaccepted screening surrogate for inhalation exposure. As toxicity indicators the following endpoints/assays were chosen:
- Lactic dehydrogenase (LDH): Cytotoxicity/membrane damage (in vitro + in vivo)
- Alkaline and hOGG1-modified Comet assay: DNA-strand breaks, oxidative DNA base modifications (in vitro)
- Polymorphonuclear cells (PMN): Inflammation and cytotoxicity (in vivo); LDH, total protein.

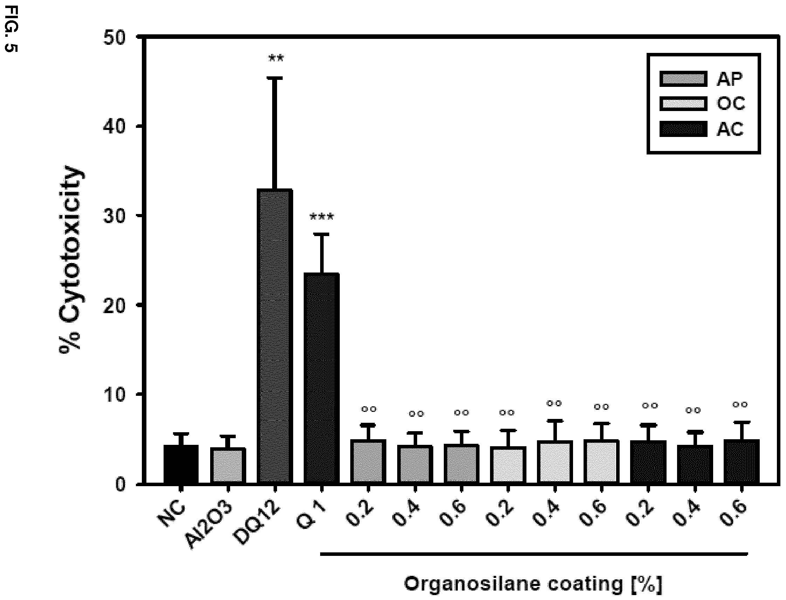

*In vitro* determination of coating efficiency:
Lactate dehydrogenase release (LDH) assay: Primary rat alveolar macrophages were incubated for 4 h with 75 µg/cm2 of the different bulk materials, and LDH activity was subsequently determined in the culture supernatants. LDH activities of Triton-X100 treated cells were set to 100% and data were expressed as % cytotoxicity (Figure 5). A significant reduction of the adverse biological effects of an active quartz sample (here referred to as quartz Q1) by respective coatings could consistently be demonstrated.

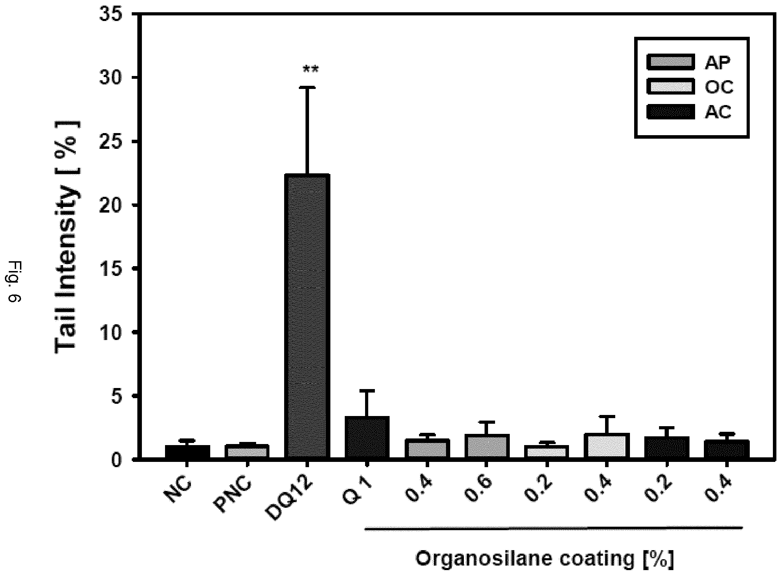

Primary rat alveolar macrophages were incubated for 4 h with 75 µg/cm2 of the different water-sized materials and processed for determination of DNA-strand break induction, using the alkaline comet assay. Mean tail intensities of 100 nuclei per treatment were determined microscopically with the Comet Assay III software (Perceptive Instruments, UK). In each case, data represent means ± SD of 3 independent experiments. **/*** and °° Significantly different from the particulate negative control (PNC) and Q1 without coating, respectively: P ≤ 0.01 / 0.001, Student's t-test for unpaired values, two-sided. Legend: NC = negative control: PNC = particulate negative control, Al2O3; DQ12 = quartz positive control; AP = Q1 sample coated with aminoalkylpolysiloxane (hydrophobic); OC = Q1 sample coated with octyltrimethoxysilane (hydrophobic); AC = Q1 sample coated with (3-acryloxypropyl)trimethoxysilane (hydrophilic) (Figure 6).

In vivo determination of coating stability at 90 days after intratracheal instillation. Five male Wistar rats were exposed to the different materials (in total 2 mg/rat) or physiological saline as negative control (0.3 ml/rat) by intratracheal instillation. 90 days after treatment start, lungs were bronchoalveolar lavage (BAL) was performed with physiologic saline.

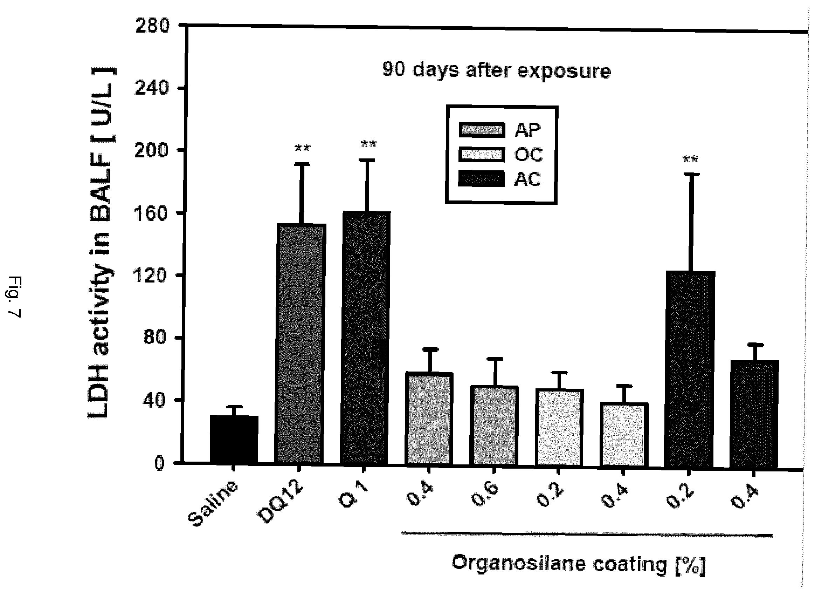

Figure 7 shows lactate dehydrogenase (LDH) activity was measured in BAL fluid as a marker for membrane damage, and thus cytotoxicity. Data represent means ± SD of 5 animals per treatment. ***/** Significantly different from saline treated animals: P ≤ 0.01 / 0.001, Dunnett test.

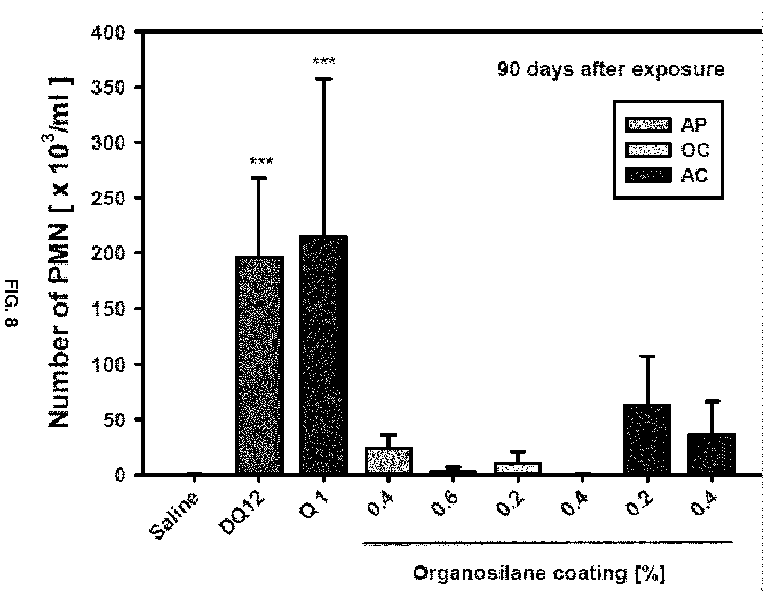

Slides were prepared from BAL fluid, slides were stained and differential cell counts were performed microscopically. Absolute number of polymorphonuclear neutrophils (PMN) per ml was subsequently calculated. (Figure 8).

The results reflected in these figures show that the tested coatings reduce the toxicological response of the untreated quartz to a greater or lesser extent.

## Claims

1. A dry method for obtaining coated quartz **characterized in that** it consists of the following steps
(a) adding quartz into a dry mixing unit at a temperature of between 10 ºC and 30 ºC;
(b) dry mixing the quartz of step (a) with a silane by applying the silane onto the quartz, wherein the percent of the silane is between 0.1 % and 0.6 % by weight with respect of the quartz, wherein the mixing is performed at a temperature of between 10 ºC and 30 ºC and the mixing speed is between 140 rpm and 170 rpm;
(c) continuing dry mixing the mixture in the dry mixture unit obtained in the step b) for a time of between 30 min and 4.0 h at a mixing velocity of between 60 rpm and 150 rpm;
and optionally an additional step (a'), between (a) and (b), when the silane applied in step (b) is selected from (3-acryloxypropyl)trimethoxysilane and octyltrimethoxysilane or any combination thereof; the step (a') comprising the mixing of the silane with an amount of between 1% and 10% w/w of at least second silane selected from 3-aminopropyltrimethoxysilane, methyltriacetoxysilane, dimethyl-bis-propionyloxy-silane, bis-benzoyloxy-dimethyl-silane, N-(2-Aminoethyl)-3-aminopropyltrimethoxysilane and any combination thereof, for at least 15 minutes.

2. The dry method according to claim 1, wherein the silane of the step (b) is selected from trimethoxysilane, dimethoxysilane, 3-glycidoxypropyltrimethoxysilane, (3-acriloxypropyl)trimethoxysilane, (3-methacryloxypropyl)trimethoxysilane, Ureidopropyltrimethoxysilane, 3-aminopropyltrimethoxysilane, N-2-aminoethyl)-3-aminopropyltrimethoxysilane, N-(3-triethoxysilylpropyl)gluconamide and any combination thereof.

3. The dry method according to claim 2, wherein the silane is (3-acriloxypropyl)trimethoxysilane.

4. The dry method according to claim 1, wherein the silane of the step (b) is selected from N, N-(dimethylamino)trimethylsilane, Hexamethyldisilazane, Vinyltrimethoxysilane, 3-chloropropyltrimethoxysilane, Trimethylmethoxysilane, n-octyltrimethoxysilane, Aminoalkylpolysiloxane, Trimethoxypropylsilane and any combination thereof.

5. The dry method according to claim 4, wherein the silane is n-octyltrimethoxysilane.

6. The dry method according to claim 4, wherein the silane is aminoalkylpolysiloxane.

7. The dry method according to any claim 1 to 6, wherein the silane applying technique of step (b) is selected from spraying or dripping.

8. The dry method according to claim 7, wherein the silane applying technique of step (b) is dripping.

9. The dry method according to claim 1, wherein the time mixing of step (c) is at least 3 hours.

## Patentansprüche

1. Trockenverfahren zur Gewinnung von beschichtetem Quarz, **dadurch gekennzeichnet, dass** es aus den folgenden Schritten besteht
(a) Zugeben von Quarz in eine Trockenmischeinheit bei einer Temperatur zwischen 10 °C und 30 °C;
(b) Trockenmischen des Quarzes aus Schritt (a) mit einem Silan durch Aufbringen des Silans auf den Quarz, wobei der Prozentsatz des Silans zwischen 0,1 und 0,6 Gewichts-%, bezogen auf den Quarz, beträgt, wobei das Mischen bei einer Temperatur zwischen 10 °C und 30 °C durchgeführt wird und die Mischgeschwindigkeit zwischen 140 UpM und 170 UpM liegt;
(c) Fortsetzen des Trockenmischens der in Schritt (b) in der Trockenmischeinheit erhaltenen Mischung für einen Zeitraum zwischen 30 Minuten und 4,0 Stunden bei einer Mischgeschwindigkeit zwischen 60 UpM und 150 UpM;
und wahlweise einem zusätzlichen Schritt (a') zwischen (a) und (b), wenn das in Schritt (b) aufgebrachte Silan aus (3-Acryloxypropyl)trimethoxysilan und Octyltrimethoxysilan oder einer beliebigen Kombination davon ausgewählt ist;
wobei Schritt (a') das Mischen des Silans mit einer Menge zwischen 1 und 10 Gew.-% mindestens eines zweiten Silans, ausgewählt aus 3-Aminopropyltrimethoxysilan, Methyltriacetoxysilan, Dimethyl-bispropionyloxysilan, Bis-benzoyloxydimethylsilan, N-(2-Aminoethyl)-3-aminopropyltrimethoxysilan und einer beliebigen Kombination davon, für mindestens 15 Minuten umfasst.

2. Trockenverfahren gemäß Anspruch 1, wobei das Silan aus Schritt (b) aus Trimethoxysilan, Dimethoxysilan, 3-Glycidoxypropyltrimethoxysilan, (3-Acryloxypropyl)trimethoxysilan, (3-Methacryloxypropyl)trimethoxysilan, Ureidopropyltrimethoxysilan, 3-Aminopropyltrimethoxysilan, N-(2-Aminoethyl)-3-aminopropyltrimethoxysilan, N-(3-Triethoxysilylpropyl)gluconamid und einer beliebigen Kombination davon ausgewählt ist.

3. Trockenverfahren gemäß Anspruch 2, wobei das Silan (3-Acryloxypropyl)trimethoxysilan ist.

4. Trockenverfahren gemäß Anspruch 1, wobei das Silan aus Schritt (b) aus N,N-(Dimethylamino)trimethylsilan, Hexamethyldisilazan, Vinyltrimethoxysilan, 3-Chlorpropyltrimethoxysilan, Trimethylmethoxysilan, n-Octyltrimethoxysilan, Aminoalkylpolysiloxan, Trimethoxypropylsilan und einer beliebigen Kombination davon ausgewählt ist.

5. Trockenverfahren gemäß Anspruch 4, wobei das Silan n-Octyltrimethoxysilan ist.

6. Trockenverfahren gemäß Anspruch 4, wobei das Silan Aminoalkylpolysiloxan ist.

7. Trockenverfahren gemäß einem der Ansprüche 1 bis 6, wobei die Silanaufbringtechnik von Schritt (b) aus Sprühen oder Auftropfen ausgewählt ist.

8. Trockenverfahren gemäß Anspruch 7, wobei die Silanaufbringtechnik von Schritt (b) Auftropfen ist.

9. Trockenverfahren gemäß Anspruch 1, wobei die Zeitdauer des Mischens in Schritt (c) mindestens 3 Stunden beträgt.

## Revendications

1. Procédé à sec destiné à obtenir un quartz revêtu **caractérisé en ce qu'**il est constitué des étapes suivantes
(a) l'ajout de quartz dans une unité de mélange à sec à une température entre 10 °C et 30 °C ;
(b) le mélange à sec du quartz de l'étape (a) avec un silane par application du silane sur le quartz, dans lequel le pourcentage du silane est entre 0,1 % et 0,6 % en poids par rapport au quartz, dans lequel le mélange est effectué à une température entre 10 °C et 30 °C et la vitesse de mélange est entre 140 tr/min et 170 tr/min ;
(c) la poursuite du mélange à sec du mélange dans l'unité de mélange à sec obtenu à l'étape b) pendant une durée entre 30 min et 4,0 h à une vitesse de mélange entre 60 tr/min et 150 tr/min ;
et éventuellement une étape supplémentaire (a'), entre (a) et (b), lorsque le silane appliqué dans l'étape (b) est choisi parmi le (3-acryloxypropyl)triméthoxysilane et l'octyltriméthoxysilane ou une combinaison quelconque de ceux-ci ; l'étape (a') comprenant le mélange du silane avec une quantité entre 1 % et 10 % p/p d'au moins un second silane choisi parmi le 3-aminopropyltriméthoxysilane, le méthyltriacétoxysilane, le diméthyl-bis-propionyloxy-silane, le bis-benzoyloxy-diméthyl-silane, le N-(2-aminoéthyl)-3-aminopropyltriméthoxysilane et une combinaison quelconque de ceux-ci, pendant au moins 15 minutes.

2. Procédé à sec selon la revendication 1, dans lequel le silane de l'étape (b) est choisi parmi le triméthoxysilane, le diméthoxysilane, le 3-glycidoxypropyltriméthoxysilane, le (3-acriloxypropyl)triméthoxysilane, le (3-méthacryloxypropyl)triméthoxysilane, l'uréidopropyltriméthoxysilane, le 3-aminopropyltriméthoxysilane, le N-(2-aminoéthyl)-3-aminopropyltriméthoxysilane, le N-(3-triéthoxysilylpropyl)gluconamide et une combinaison quelconque de ceux-ci.

3. Procédé à sec selon la revendication 2, dans lequel le silane est le (3-acriloxypropyl)triméthoxysilane.

4. Procédé à sec selon la revendication 1, dans lequel le silane de l'étape (b) est choisi parmi le N,N-(diméthylamino)triméthylsilane, la hexaméthyldisilazane, le vinyltriméthoxysilane, le 3-chloropropyltriméthoxysilane, le triméthylméthoxysilane, le n-octyltriméthoxysilane, l'aminoalkylpolysiloxane, le triméthoxypropylsilane et une combinaison quelconque de ceux-ci.

5. Procédé à sec selon la revendication 4, dans lequel le silane est le n-octyltriméthoxysilane.

6. Procédé à sec selon la revendication 4, dans lequel le silane est l'am inoalkylpolysiloxane.

7. Procédé à sec selon l'une quelconque des revendications 1 à 6, dans lequel la technique d'application de silane de l'étape (b) est choisie parmi la pulvérisation ou la stillation.

8. Procédé à sec selon la revendication 7, dans lequel la technique d'application de silane de l'étape (b) est la stillation.

9. Procédé à sec selon la revendication 1, dans lequel le temps de mélange de l'étape (c) est d'au moins 3 heures.
